# EUROPEAN PATENT APPLICATION

(11) **EP 2 826 968 A1**
(43) Date of publication of application: **21.01.2015**
(21) Application number: 12856586.8
(22) Date of filing: 14.03.2012
(51) Int. Cl.: F01N 3/023

(54) **EXHAUST GAS PURIFICATION DEVICE FOR INTERNAL COMBUSTION ENGINE**

(71) Applicant: Toyota Jidosha Kabushiki Kaisha, Toyota-shi, Aichi 471-8571 (JP)
(72) Inventor: SAIGO Yusuke, Toyota-shi Aichi 471-8571 (JP); NAKAMURA Toshihiro, Toyota-shi Aichi 471-8571 (JP)
(74) Representative: Albutt, Anthony John
(86) International application number: PCT/JP2012/056572
(87) International publication number: WO 2013/136470

(57) **Abstract**

While the amount of PM building up in a particulate filter (DPF) is increasing (until reaching a DPF regeneration start determination value Thpms), one or both of an EGR amount reduction control in which an EGR amount to be recirculated into an air intake system is reduced so that the amount of NOx in exhaust gas increases, and a NOx release control in which a NOx storage catalyst is caused to release NOx, are executed to increase the amount of NO₂ supplied to the particulate filter, whereby the PM buildup rate of the particulate filter is reduced, and therefore, the regeneration interval of the DPF is increased.

## Description

### [Technical Field]

The present invention relates to exhaust purification devices for internal combustion engines.

### [Background Art]

Exhaust gas emitted when a diesel engine in a vehicle or the like is driven contains particulate matter (hereinafter also referred to as "PM") including carbon as a major component, which is responsible for air pollution.

As a device for removing PM contained in the exhaust gas, an exhaust purification device is known that employs a particulate filter in an exhaust path of the diesel engine to collect PM contained in the exhaust gas passing through the exhaust path, thereby reducing the amount of emissions to the atmosphere. The particulate filter is, for example, a diesel particulate filter (DPF).

When the particulate filter is used to collect PM, the collected PM may build up in the particulate filter, so that the particulate filter may get clogged up. In this case, a pressure drop increases in the exhaust gas passing through the particulate filter, leading to an increase in back pressure of engine exhaust. As a result, a decrease in engine output or fuel efficiency occurs.

To overcome the above problem, conventionally, when the amount (buildup amount) of PM collected in the particulate filter reaches a predetermined amount (filter regeneration start determination value), the temperature of the catalyst bed is increased to a high temperature to oxidize (burn) the PM in the filter, thereby removing the PM. Specifically, for example, a small amount of fuel is additionally injected (post injection) after primary fuel injection (main injection) to increase the temperature (exhaust temperature) of a catalytic converter oxidation (CCO) provided upstream from the particulate filter (along the flow of the exhaust gas), whereby the PM buildup in the particulate filter is oxidized (burnt) and removed (see, for example, Patent Literature 1). The removal of PM buildup in a particulate filter is referred to as "filter regeneration".

In the exhaust purification device in which a catalytic converter oxidation is provided upstream from the particulate filter, NO in the exhaust gas is oxidized to NO₂ by the catalytic converter oxidation. The NO₂ accelerates burning of PM (filter regeneration).

### [Citation List]

### [Patent Literature]

[PTL 1] JP 2011-127561 A
[PTL 2] JP 2009-144578 A
[PTL 3] JP 2006-183563 A

### [Disclosure of Invention]

### [Technical Problems]

Incidentally, in recent years, in order to meet tightening emissions regulations, a NOx storage catalyst, such as a NOx storage reduction (NSR) catalyst, has been introduced upstream from the particulate filter (along the flow of the exhaust gas).

In such an exhaust purification device, NOx contained in exhaust gas emitted from the combustion chamber is removed by the NOx storage catalyst. Therefore, the NO₂ concentration decreases at the entrance of the particulate filter compared to when a catalytic converter oxidation (CCO) is provided upstream from the particulate filter. If the NO₂ concentration decreases, the PM removal effect of NO₂ is reduced, so that the PM buildup rate increases, and therefore, the interval between one filter regeneration and the next decreases. In other words, the frequency of filter regeneration increases, resulting in a deterioration in fuel efficiency (specific fuel consumption).
Also, oil dilution may be accelerated.

Note that oil dilution occurs when a portion of fuel injected by the aforementioned post injection flows from the piston to the oil pan and infiltrates into engine oil. Therefore, as the frequency of post injection for filter regeneration increases, oil dilution is more likely to become worse.

The present invention has been made with respect to these and other considerations. It is an object of the present invention to provide an exhaust purification device that includes a particulate filter provided in an exhaust path of an internal combustion engine, and a NOx storage catalyst (e.g., an NSR catalyst) provided in the exhaust path upstream from the particulate filter, whereby the regeneration interval of the particulate filter is increased.

### [Means for Solving Problem]

The present invention is directed to an exhaust purification device applicable to an internal combustion engine having an EGR device that recirculates a portion of exhaust gas emitted to an exhaust emission system into an air intake system, the exhaust purification device including a particulate filter that is provided in an exhaust path of the internal combustion engine to collect particulate matter in the exhaust gas, and a NOx storage catalyst (e.g., an NSR catalyst etc.) that is provided in the exhaust path upstream from the particulate filter along the flow of the exhaust gas. According to the present invention, such an exhaust purification device has a characteristic feature that when the amount of particulate matter building up in the particulate filter has exceeded a predetermined determination threshold that is smaller than a filter regeneration start determination value, an EGR amount reduction control is executed to reduce an EGR amount to be recirculated into the air intake system, thereby increasing the amount of NOx in the exhaust gas.

According to the present invention, when the amount (PM buildup amount) of particulate matter building up in the particulate filter (DPF) has exceeded the predetermined determination threshold that is smaller than the filter regeneration start determination value, the EGR amount reduction control is executed to reduce the EGR amount to be recirculated into the air intake system, whereby the PM buildup rate can be reduced. Specifically, when the EGR amount reduction control is executed, the combustion temperature increases, and therefore, the amount of NOx in the exhaust gas increases, whereby the amount of NO₂ flowing into the particulate filter can be increased. When the amount of NO₂ flowing into the particulate filter increases, the PM buildup rate is reduced by the PM removal effect of the NO₂, whereby the interval of filter regeneration can be increased.

Note that the EGR amount reduction control means that an EGR valve of the EGR device is set to be more closed than in the normal control, whereby the EGR amount is reduced.

The present invention may be directed to an exhaust purification device including a particulate filter that is provided in an exhaust path of an internal combustion engine to collect particulate matter in exhaust gas, and a NOx storage catalyst that is provided in the exhaust path upstream from the particulate filter along the flow of the exhaust gas. According to the present invention, the exhaust purification device may be configured so that when the amount of particulate matter building up in the particulate filter has exceeded a predetermined determination threshold that is smaller than a filter regeneration start determination value, a NOx release control is executed to cause the NOx storage catalyst provided upstream from the particulate filter to release NOx.

With this configuration, when the amount of PM building up in the particulate filter has exceeded the predetermined determination threshold that is smaller than the filter regeneration start determination value, the NOx storage catalyst is caused to release NOx. The amount of NO₂ flowing into the particulate filter is increased by the release of NOx. Therefore, also in this configuration, the PM buildup rate can be reduced, and therefore, the interval of filter regeneration can be increased.

Note that the NOx release control, which is similar to a commonly used restoration-from-sulfur-poisoning control, means that by continually and repeatedly adding fuel to the exhaust gas by post injection, the temperature of the catalyst bed is increased to a high temperature (e.g., 600-700°C), and the exhaust gas is enriched to contain a large amount of HC.

In the present invention, while the amount of PM building up in the particulate filter is increasing (until reaching the filter regeneration start determination value), the EGR amount reduction control and the NOx release control may be executed. By thus executing the EGR amount reduction control and the NOx release control in combination, the PM buildup rate can be more effectively reduced, and therefore, the interval of filter regeneration can be further increased.

When the EGR amount reduction control and the NOx release control are executed in combination, the NOx release control and the EGR amount reduction control may be preferably successively executed (i.e., the EGR amount reduction control may be executed before the NOx release control may be executed) while the amount of PM building up in the particulate filter is increasing. This is because an increase in NOx due to the EGR amount reduction control is not very large, and therefore, the EGR amount reduction control is preferably executed when the amount of PM building up in the particulate filter is relatively small. On the other hand, the NOx release control means that, as described above, the temperature of the catalyst bed is increased to a high temperature, and the exhaust gas is enriched. A large amount of NOx can be released at once or quickly by the NOx release control, and therefore, the PM buildup rate can be more effectively reduced if the NOx release control is executed when the amount of PM building up in the particulate filter is relatively large.

Specifically, for example, the EGR amount reduction control and the NOx release control are combined as follows. When the amount of particulate matter building up in the particulate filter has exceeded a first determination threshold that is smaller than the filter regeneration start determination value, the EGR amount reduction control is executed to reduce an EGR amount to be recirculated into the air intake system so as to increase the amount of NOx in the exhaust gas, and when the amount of particulate matter building up in the particulate filter has exceeded a second determination threshold that is greater than the first determination threshold, the NOx release control is executed to cause the NOx storage catalyst to release NOx.

More specifically, for example, when the amount of particulate matter building up in the particulate filter has exceeded the first determination threshold, the EGR amount reduction control is executed, and when the amount of particulate matter building up in the particulate filter has exceeded the second determination threshold, EGR recirculation into the air intake system is interrupted, and the NOx release control is executed, and after the NOx release control is ended, the EGR amount reduction control is executed again. With such a configuration, the PM buildup rate can be more effectively reduced, and therefore, the interval of filter regeneration can be further increased. Note that, by interrupting the EGR control during the NOx release control, HC caused by fuel addition (post injection etc.) can be prevented from adhering to the EGR valve of the EGR device and the like.

Here, even if the NOx release control is executed when the NOx storage amount of the NOx storage catalyst (e.g., an NSR catalyst etc.) is small, the amount of NOx released from the NOx storage catalyst may be small (or no NOx may be released), and therefore, the NO₂ increasing effect may not be obtained. Based on this finding, when the amount of PM building up in the particulate filter has exceeded the second determination threshold, then if conditions for execution of the NOx release control (e.g., the NOx storage amount is large enough to reduce the PM buildup amount) are met (NOx can be released), the NOx release control may be executed. With such a configuration, the NOx release control (post injection etc.) can be prevented from being uselessly executed, whereby a deterioration in fuel efficiency can be reduced.

Note that, in the present invention, while the amount of PM building up in the particulate filter is increasing (until reaching the filter regeneration start determination value), the EGR amount reduction control and the NOx release control may be successively executed (i.e., the NOx release control may be executed before the EGR amount reduction control may be executed).

### [Effects of the Invention]

According to the present invention, in an exhaust purification device including a particulate filter provided in an exhaust path of an internal combustion engine, and a NOx storage catalyst provided in the exhaust path upstream from the particulate filter, the regeneration interval of the particulate filter can be increased, whereby the fuel efficiency can be improved.

### [Brief Description of Drawings]

[FIG. 1]

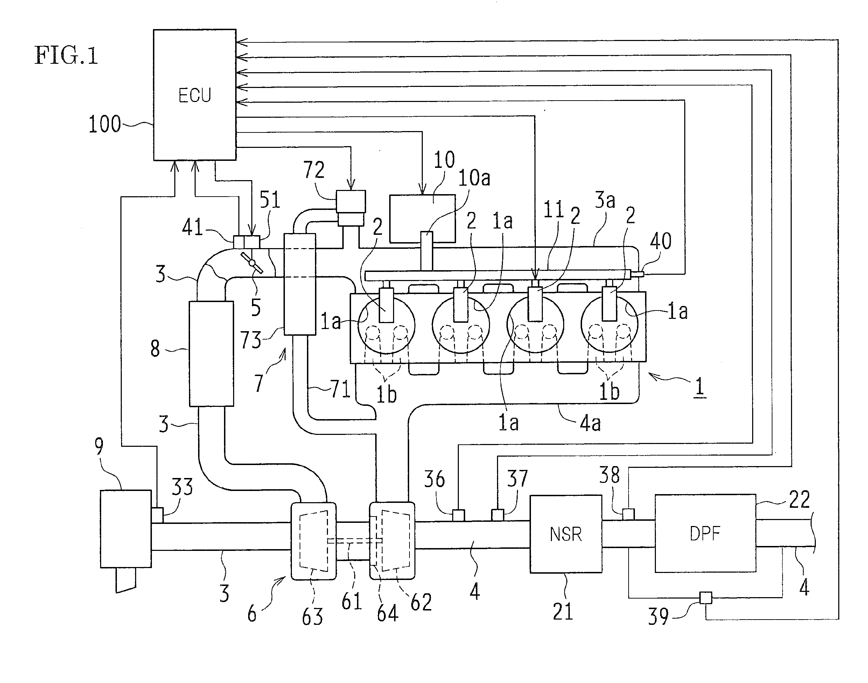

   FIG. 1 is a diagram schematically showing a configuration of an example engine to which an exhaust purification device according to the present invention is applied.
[FIG. 2]

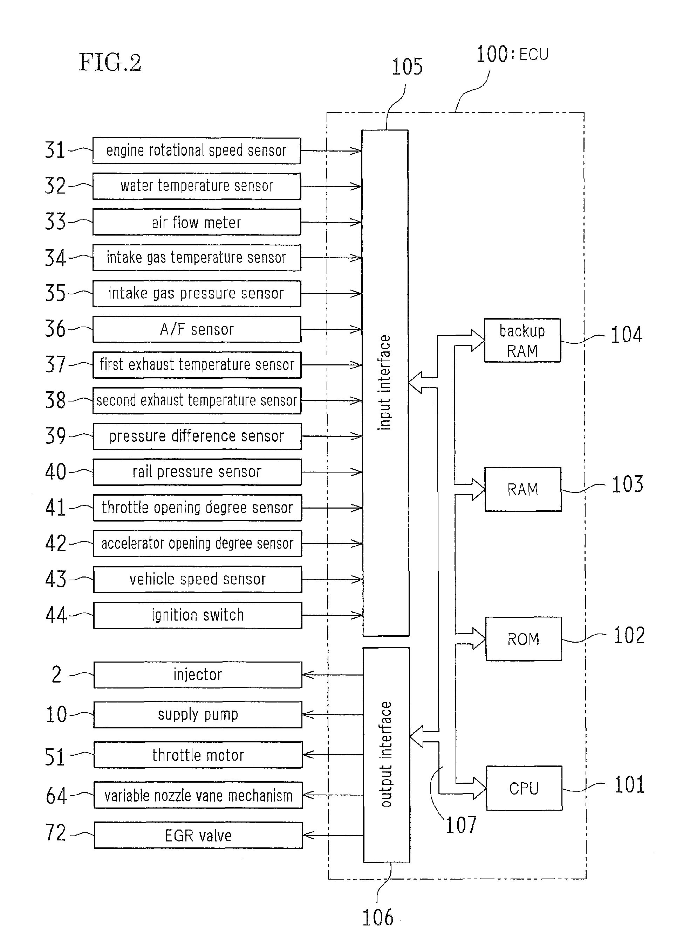

   FIG. 2 is a block diagram showing a configuration of a control system, such as an ECU.
[FIG. 3]

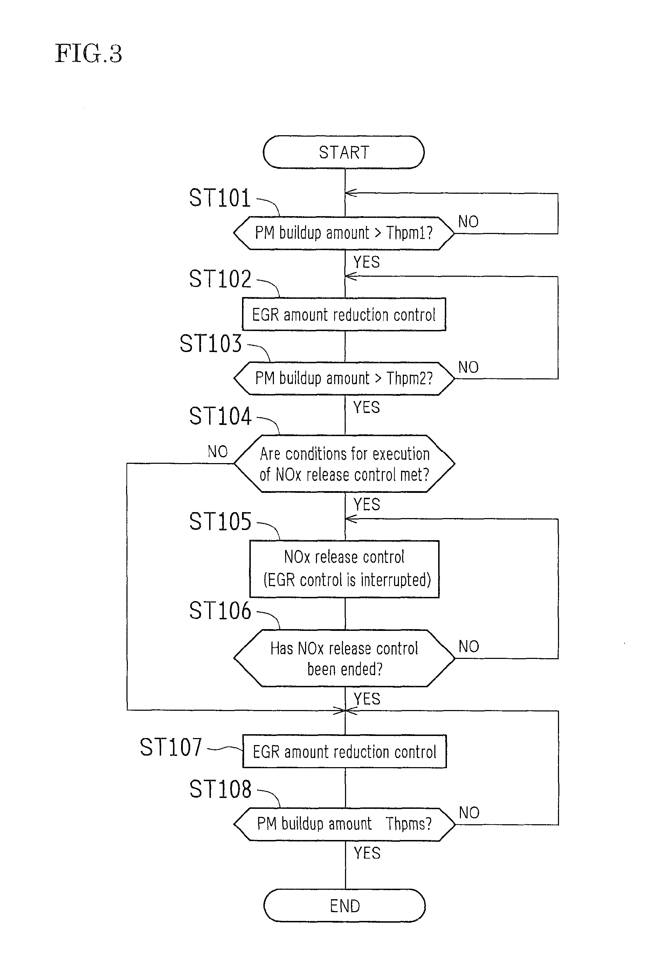

   FIG. 3 is a flowchart showing an example PM buildup rate reduction control.
[FIG. 4]

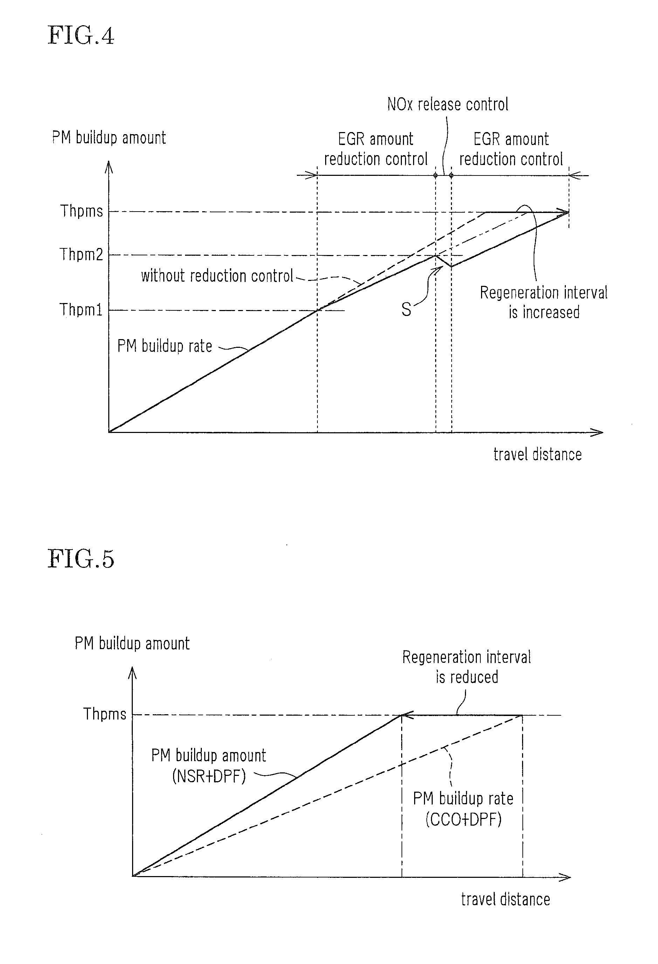

   FIG. 4 is a conceptual diagram showing how the PM buildup rate reduction control is executed.
[FIG. 5]
   FIG. 5 is a diagram showing the PM buildup rates of an exhaust purification device including a CCO and a DPF and another exhaust purification device including an NSR catalyst and a DPF.

### [Mode for Carrying Out the Invention]

Embodiments of the present invention will be described hereinafter with reference to the accompanying drawings.

An example engine (internal combustion engine) to which an exhaust purification device according to the present invention is applied will be described with reference to FIG. 1.

### - Engine -

The example engine 1 is, for example, a common rail in-cylinder direct injection four-cylinder diesel engine. As shown in FIG. 1, each cylinder of the engine 1 is provided with an injector (fuel injection valve) 2 that injects fuel that is to be burnt in a combustion chamber 1a. The injector 2 of each cylinder is connected to a common rail 11. A supply pump 10 is connected to the common rail 11.

The supply pump 10 pumps fuel from a fuel tank and pressurizes the pumped fuel, and thereafter, supplies the pressurized fuel through a fuel path10a to the common rail 11. The common rail 11 functions as a pressure accumulator that maintains the pressurized fuel supplied from the supply pump 10 at a predetermined pressure (i.e., the common rail 11 stores the pressure of the fuel), and distributes the fuel having the maintained pressure to each the injector 2. The injector 2 is an electromagnetically-actuated opening/closing valve that, when a predetermined voltage is applied thereto, opens to inject and supply fuel into the combustion chamber 1a. The opening and closing (fuel injection amount and injection timing) of the injector 2 is duty-controlled by an electronic control unit (ECU) 100.

An air intake path 3 and an exhaust path 4 are connected to the engine 1. In the air intake path 3, an air cleaner 9, an air flow meter 33, a compressor impeller 63 of a turbocharger 6 described below, an intercooler 8, and a throttle valve (air intake throttle valve) 5 are successively provided from an upstream portion (an upstream portion of the flow of intake air) toward the downstream side. The degree of throttle opening of the throttle valve 5 is adjusted by a throttle motor 51. The degree of throttle opening of the throttle valve 5 is detected by a throttle opening degree sensor 41. Note that the air intake path 3 is divided into branch paths corresponding to the respective cylinders at an intake manifold 3a provided downstream from the throttle valve 5.

The branch portions corresponding to the respective cylinders of the exhaust path 4 merge together at an exhaust manifold 4a connected to the combustion chambers 1a of the cylinders of the engine 1.

A NOx storage reduction (NSR) catalyst 21 that reduces and removes NOx in exhaust gas, and a DPF 22 that collects PM in exhaust gas, are provided and connected in series in the exhaust path 4. Specifically, the NSR catalyst 21 is provided in the exhaust path 4 upstream from the DPF 22 along the flow of exhaust gas.

The NSR catalyst 21 includes a noble metal (e.g., platinum (Pt)) and a NOx storage component (e.g., potassium (K)) that are supported on a surface of a base of alumina (Al₂O₃) etc. When exhaust gas that is leaner than stoichiometry is supplied to the NSR catalyst 21, the NSR catalyst 21 stores NOx in the exhaust gas in the form of nitrate. When exhaust gas that is richer than stoichiometry is supplied to the NSR catalyst 21, the NSR catalyst 21 releases stored NOx, which is in turn reduced by reaction with ambient gas.

Here, in the case of the diesel engine of this embodiment, the air-fuel ratio of gases in the cylinder during normal operation is significantly leaner than stoichiometry (e.g., A/F = 14.6). Therefore, exhaust gas that is leaner than stoichiometry is supplied to the NSR catalyst 21, and the NSR catalyst 21 stores NOx in the exhaust gas. On the other hand, it is necessary to regenerate the NSR catalyst 21 by causing the NSR catalyst 21 to release the stored NOx. Therefore, the air-fuel ratio of gases in the cylinder is controlled to a value that is richer than stoichiometry (e.g., A/F = 14.0), and rich exhaust gas is supplied to the NSR catalyst 21 (NOx reduction control).

The NSR catalyst 21 has the property of adsorbing sulfur originated from the sulfur component of fuel in addition to NOx. When the sulfur adsorption occurs, the function of storing NOx is inhibited. Therefore, in order to regenerate the NSR catalyst 21 by removing the adsorbed sulfur, the air-fuel ratio is caused to be richer. Regeneration of the NSR catalyst 21 adsorbing sulfur (restoration-from-sulfur-poisoning control) is performed at higher temperature conditions than that of the control of regenerating the NSR catalyst 21 storing NOx. Note that the NOx reduction control and the restoration-from-sulfur-poisoning control will be described in detail below.

The NSR catalyst 21, the DPF 22, a control system (e.g., the ECU 100), and the like constitute the exhaust purification device of the present invention.

An A/F sensor 36 and a first exhaust temperature sensor 37 are provided in the exhaust path 4 upstream from the NSR catalyst 21 (along the flow of exhaust gas). The temperature of exhaust gas entering the NSR catalyst 21 can be detected based on an output signal from the first exhaust temperature sensor 37. A second exhaust temperature sensor 38 is provided in the exhaust path 4 between the NSR catalyst 21 and the DPF 22. The temperature of exhaust gas entering the DPF 22 can be detected based on an output signal from the second exhaust temperature sensor 38. Moreover, a pressure difference sensor 39 is provided that detects a pressure difference between an upstream pressure and a downstream pressure of the DPF 22.

Output signals of the A/F sensor 36, the first exhaust temperature sensor 37, the second exhaust temperature sensor 38, and the pressure difference sensor 39 are input to the ECU 100.

### - Turbocharger -

The engine 1 of this example includes a turbocharger (supercharger) 6 that compresses intake air using the pressure of exhaust gas. The turbocharger 6 includes a turbine wheel 62 and the compressor impeller 63 that are connected by a rotor shaft 61.

The compressor impeller 63 faces the inside of the air intake path 3, while the turbine wheel 62 faces the inside of the exhaust path 4. The turbocharger 6 rotates the compressor impeller 63 using the flow of exhaust gas (the pressure of exhaust gas) received by the turbine wheel 62, thereby compressing intake air. The turbocharger 6 of this example is a variable nozzle turbocharger. A variable nozzle vane mechanism 64 is provided to the turbine wheel 62. By adjusting the opening degree of the variable nozzle vane mechanism 64, the boost pressure of the engine 1 can be adjusted. Note that the intake air whose temperature is increased by compression by the turbocharger 6 is forcibly cooled by the intercooler 8 provided in the air intake path 3.

### - EGR device -

The engine 1 also includes an exhaust gas recirculation (EGR) device 7. The EGR device 7 recirculates a portion of exhaust gas flowing in the exhaust path 4 into the air intake path 3 and supplies the exhaust gas back to the combustion chamber 1a of each cylinder, thereby lowering combustion temperature to reduce the amount of NOx generated.

The EGR device 7 includes an EGR path 71 that connects the air intake path 3 (the intake manifold 3a) and the exhaust path 4 (the exhaust manifold 4a) together. In the EGR path 71, an EGR cooler 73 for cooling EGR gas passing (recirculating) through the EGR path 71, and an EGR valve 72, are provided successively from the upstream side of the flow of the EGR gas. By adjusting the opening degree of the EGR valve 72, the amount of the EGR gas (the amount of exhaust gas recirculation) introduced from the exhaust path 4 (the exhaust manifold 4a) into the air intake path 3 (the intake manifold 3a) can be adjusted. The opening degree of the EGR valve 72 is controlled (EGR control) by the ECU 100.

Note that the EGR device 7 may include an EGR bypass path that bypasses the EGR cooler 73, and an EGR bypass switch valve.

### - ECU -

As shown in FIG. 2, the ECU 100 includes a central processing unit (CPU) 101, a read only memory (ROM) 102, a random access memory (RAM) 103, a backup RAM 104, and the like.

The ROM 102 stores various control programs, maps that are referenced when the control programs are executed, and the like. The CPU 101 executes various calculation processes based on the control programs and maps stored in the ROM 102. The RAM 103 is a memory that temporarily stores results of calculation by the CPU 101, data input from sensors, and the like. The backup RAM 104 is a non-volatile memory that stores, for example, data that should be saved when the engine 1 is stopped.

The CPU 101, the ROM 102, the RAM 103, and the backup RAM 104 are connected to each other via a bus 107, and are also connected to an input interface 105 and an output interface 106.

Connected to the input interface 105 are an engine rotational speed sensor 31 that detects the rotational speed of a crank shaft that is the output shaft of the engine 1, a water temperature sensor 32 that detects the temperature of engine water (cooling water), the air flow meter 33, an intake air temperature sensor 34 that is provided in the intake manifold 3a to detect the temperature of intake air, an intake air pressure sensor 35 that is provided in the intake manifold 3a to detect the pressure of intake air, the A/F sensor 36, the first exhaust temperature sensor 37, the second exhaust temperature sensor 38, the pressure difference sensor 39, a rail pressure sensor 40 that detects the pressure of pressurized fuel in the common rail 11, the throttle opening degree sensor 41, an accelerator opening degree sensor 42, a vehicle speed sensor 43, and the like. The ECU 100 receives signals from these sensors. An ignition switch 44 is connected to the input interface 105. When the ignition switch 44 is turned on (IG-ON), cranking of the engine 1 by a starter motor (not shown) is started.

Connected to the output interface 106 are the injector 2, the supply pump 10, the throttle motor 51 of the throttle valve 5, the variable nozzle vane mechanism 64 of the turbocharger 6, the EGR valve 72, and the like.

The ECU 100 controls, based on the output signals of the sensors, the engine 1, specifically, the opening degree of the throttle valve 5 of the engine 1, the amount of fuel injected and the timing of injection (opening and closing of the injector 2), EGR (the opening degree of the EGR valve 72), and the like.

The ECU 100 also executes a restoration-from-sulfur-poisoning control, a NOx reduction control, a PM buildup amount estimation, a DPF regeneration control, and a PM buildup rate reduction control described below.

### [Restoration-from-Sulfur-Poisoning Control]

In the restoration-from-sulfur-poisoning control, the ECU 100 allows the NOx storage reduction catalyst in the NSR catalyst 21 to release sulfur when the capability of storing NOx of the NOx storage reduction catalyst is reduced due to sulfur poisoning. In the restoration-from-sulfur-poisoning control, fuel continues to be repeatedly added to exhaust gas by post injection (secondary injection after primary fuel injection (main injection)), thereby increasing the temperature of the catalyst bed to a high temperature (e.g., 600-700°C) and enriching the exhaust gas to contain a large amount of HC. The restoration-from-sulfur-poisoning control is executed when the amount of sulfur building up in the NSR catalyst 21 that is estimated based on an operating state of the engine (e.g., the rotational speed or load factor of the engine, etc.) exceeds a predetermined value (corresponding to an acceptable value). Alternatively the restoration-from-sulfur-poisoning control may be executed at regular intervals of travel distance or engine operating time.

### [NOx Reduction Control]

In the NOx reduction control, the ECU 100 reduces NOx stored in the NOx storage reduction catalyst of the NSR catalyst 21 to N₂. In the NOx reduction control, post injection is performed at irregular intervals that are relatively long periods of time, whereby the temperature of the catalyst bed is maintained at a relatively low temperature (e.g., 250-500°C), and the exhaust gas is enriched. The NOx reduction control is executed when the NOx storage amount of the NSR catalyst 21 that is estimated based on an engine operating state (e.g., the rotational speed or load factor of the engine, etc.) exceeds a predetermined value (corresponding to an acceptable value). Alternatively, the NOx reduction control may be executed at regular intervals of travel distance or engine operating time.

Note that the aforementioned NOx reduction control and restoration-from-sulfur-poisoning control, and the DPF regeneration control described below, are each executed when there is a request for execution. When these controls are simultaneously requested, the controls are executed in order of priority (e.g., the PM regeneration control → the restoration-from-sulfur-poisoning control → the NOx reduction control).

### [PM Buildup Amount Estimation]

The ECU 100 estimates the PM buildup amount by performing the following two processes (1) and (2).

(1) PM Amount Estimation Process based on Pressure Difference In the engine 1 of FIG. 1, as PM builds up in the DPF 22, the PM buildup impedes the flow of the exhaust gas, resulting in an increase in the flow resistance of the exhaust gas. As a result, a pressure difference ΔP in the pressure of the exhaust gas between the upstream and downstream sides of the DPF 22 provided in the exhaust path 4 increases. The pressure difference ΔP between before and after the DPF 22 decreases as the PM buildup in the DPF 22 is progressively removed by burning, so that the PM buildup amount of the DPF 22 decreases. Thus, there is a correlation relationship between the pressure difference ΔP between before and after the DPF 22 and the PM buildup amount of the DPF 22, and therefore, the PM buildup amount PMa of the DPF 22 can be estimated based on the pressure difference ΔP.

Therefore, in this embodiment, the buildup amount of PM collected in the DPF 22 is estimated by referencing a map based on the pressure difference ΔP that is obtained based on an output signal from the pressure difference sensor 39 provided in the exhaust path 4 (the DPF 22). Note that the map used in calculation of the PM buildup amount PMa contains appropriate values that are obtained by experimentation, simulation, etc., taking into consideration the correlation relationship between the pressure difference ΔP between before and after the DPF 22 and the PM buildup amount. The map is stored in the ROM 102 of the ECU 100.

(2) PM Amount Estimation Process based on Engine Operating State When the engine 1 is operating (the DPF regeneration control is not being executed), the amount PMb of PM generated is obtained by referencing a map based on an engine rotational speed NE (recognized based on an output signal from the engine rotational speed sensor 31) and a fuel injection amount Qv (instruction value). The PM generation amount pmb is integrated to estimate a PM buildup amount PMb. Note that the map used in calculation of the PM generation amount contains values [g/s] of the PM generation amount that are obtained by performing experimentation, simulation, etc. using the engine rotational speed NE and the fuel injection amount Qv as parameters. The map is stored in the ROM 102 of the ECU 100.

The amount of PM emitted during execution of the DPF regeneration control can be obtained by referencing a map etc. based on the engine rotational speed NE obtained based on the output signal of the engine rotational speed sensor 31, and the temperature of exhaust gas (the temperature of exhaust gas entering the DPF 22) obtained based on the output signal of the second exhaust temperature sensor 38. The PM buildup amount during execution of the DPF regeneration control is estimated by subtracting the PM emission amount from the PM buildup amount (the value at the start of the DPF regeneration control). Note that the map used in calculation of the amount of PM emitted contains values [g/s] of the PM emission amount that are obtained by performing experimentation, simulation, etc. using the engine rotational speed NE and the temperature of exhaust gas as parameters. The map is stored in the ROM 102 of the ECU 100.

Here, the estimated PM buildup amount PMb obtained by the process described in (2) is saved in the ECU 100 when ignition is turned off. When ignition is turned on, updating (integration) is started with the saved values (the PM buildup amounts PMa and PMb).

### [DPF Regeneration Control]

Next, the DPF regeneration control executed by the ECU 100 will be described.

Initially, the ECU 100 estimates, during operating of the engine 1, the PM buildup amounts PMa and PMb by the processes (1) and (2), respectively. These estimated PM buildup amounts PMa and PMb increase with time. The ECU 100 determines whether or not the increasing estimated PM buildup amount PMa or PMb has reached a DPF regeneration start determination value Thpms. Note that the DPF regeneration start determination value Thpms corresponds to a limit of the PM buildup amount of the DPF 22, and is set to an appropriate value obtained by experimentation, simulation, or the like.

When one of the PM buildup amounts PMa and PMb has reached the DPF regeneration start determination value Thpms, the PM buildup in the DPF 22 is burnt and removed, whereby the DPF 22 is regenerated. Specifically, post injection is performed after performing primary fuel injection (main injection) that is fuel injection (fuel injection from the injector 2 to the combustion chamber 1a) for operating the engine. The fuel injected by post injection is oxidized by the NSR catalyst 21. The temperature of the DPF 22 is increased by heat of that oxidation and oxidation by the catalytic converter oxidation supported by the DPF 22 (e.g., the temperature of the DPF 22 is increased to about 650°C), whereby the PM collected by the DPF 22 is burnt and removed.

More specifically, proximate post injection is performed after performing main injection by the injector 2. The temperature of exhaust gas increases due to the proximate post injection. Late post injection that is post injection on the angle of delay side of the proximate post injection is also performed. As a result, the temperature of exhaust gas further increases, whereby the PM buildup in the DPF 22 can be removed by oxidation (burning). Note that the proximate post injection is started, for example, at 30° after the top dead center of the compression stroke of the piston. The late post injection is started, for example, at 100° after the top dead center of the compression stroke of the piston. The injection timing of the proximate post injection and the late post injection is not limited to that described above and may be appropriately set.

During execution of the DPF regeneration control, the ECU 100 sequentially estimates the PM buildup amount during regeneration based on the aforementioned difference ΔP between before and after the DPF 22 (or the aforementioned PM emission amount). When the estimated PM buildup amount has decreased to a regeneration completion determination value Thpme, the ECU 100 determines that regeneration of the DPF 22 has been completed (completion of full regeneration of the filter), and ends the filter regeneration control. In other words, the ECU 100 ends the post injection for DPF regeneration and returns to the normal fuel injection control.

### [PM Buildup Rate Reduction Control]

In the exhaust purification device of this embodiment, in order to address exhaust emissions regulations that have in recent years been tightening, the NSR catalyst (NOx storage catalyst) 21 is provided in the exhaust path 4 upstream from the DPF 22 (along the flow of exhaust gas). Therefore, the regeneration interval of the DPF 22 decreases, likely leading to a deterioration in fuel efficiency and oil dilution. This problem will be described.

In a conventional exhaust purification device (hereinafter also referred to as a "conventional device"), as described above the catalytic converter oxidation (CCO) is provided in the exhaust path upstream from the DPF. The catalytic converter oxidation oxidizes NO contained in the exhaust gas to NO₂, which in turn accelerates burning (filter regeneration) of PM.

In contrast to this, in the exhaust purification device in which the NSR catalyst 21 is provided in the exhaust path 4 upstream from the DPF 22, NOx contained in exhaust gas emitted from the combustion chamber 1a is reduced by the NSR catalyst 21, and therefore, the concentration of NO₂ at the entrance of the DPF 22 is reduced compared to the conventional device (CCO + DPF). As the NO₂ concentration decreases, the PM removal effect of NO₂ decreases, and therefore, the PM buildup rate increases. Therefore, as shown in FIG. 5, a period of time (travel distance) that it takes for the estimated PM buildup amount (hereinafter also simply referred to as a "PM buildup amount") to reach the DPF regeneration start determination value Thpms decreases. In other words, the regeneration interval of the DPF decreases, i.e., the frequency of filter regeneration increases, resulting in a deterioration in fuel efficiency and oil dilution.

Therefore, in this embodiment, while the PM buildup amount of the DPF 22 is increasing (until reaching the DPF regeneration start determination value Thpms), the EGR amount to be recirculated into the air intake system is reduced so that the amount of NOx contained in the exhaust gas increases (EGR amount reduction control), and the NOx storage catalyst is caused to release NOx (NOx release control) (the NOx release control may not be executed), whereby the amount of NO₂ at the entrance of the DPF 22 is increased, and therefore, the PM buildup rate is reduced.

A specific example of the control (PM buildup rate reduction control) will be described with reference to a flowchart of FIG. 3. A control routine of FIG. 3 is executed by the ECU 100.

The control routine of FIG. 3 begins at the end of the DPF regeneration process (when the estimated PM buildup amount during regeneration of the DPF has decreased to the regeneration completion determination value Thpme). When the control routine of FIG. 3 begins, it is initially determined, in step ST101, whether or not one of the PM buildup amounts PMa and PMb estimated by the processes (1) and (2) exceeds a first determination threshold Thpm1 (see FIG. 4). If the determination result is negative (NO) (the PM buildup amount ≤ Thpm1), the determination process of step ST101 is repeated. When the determination result of step ST101 has become positive (YES) (the PM buildup amount has exceeded the first determination threshold Thpm1), control proceeds to step ST102. The first determination threshold Thpm1 used in the determination process of step ST101 will be described below.

In step ST102, the EGR amount reduction control is executed to set the EGR valve 72 of the EGR device 7 to be more closed than in the normal control, thereby reducing the EGR amount. The combustion temperature increases due to the EGR amount reduction control, and therefore, the NOx generation amount increases, so that the amount of NO₂ flowing into the DPF 22 increases. A portion of PM in the DPF 22 is removed by the increase of the amount of NO₂, and therefore, the PM buildup rate of the DPF 22 decreases. As a result, for example, as shown in FIG. 4, the PM buildup rate (slope) decreases compared to when the EGR amount reduction control is not executed (indicated by a dashed line (without the reduction control)).

Here, the opening degree of the EGR valve 72 during the EGR amount reduction control (the opening degree is set to be more closed than in the normal control) is set to an appropriate value that is obtained based on an amount (a decrease in the EGR amount with respect to the normal control) that can increase the amount of NOx supplied to the DPF 22 to the extent possible within the acceptable range of the amount of NOx emitted to the downstream side of the DPF 22 (the decrease in the EGR amount is previously obtained by experimentation, simulation, or the like, and is stored in the ROM 102 of the ECU 100). The decrease in the EGR amount during the EGR amount reduction control may be constant or vary depending on an operating state (e.g., engine rotational speed, load factor, etc.) of the engine 1.

Note that the normal control of the EGR device 7 means that a target EGR amount is obtained by referencing a previously prepared normal control map, based on a current engine operating state (e.g., engine rotational speed, load factor, etc.), and the opening degree of the EGR valve 72 is adjusted to achieve the target EGR amount (including a case where the opening degree = 0 (closed)).

Next, in step ST103, it is determined whether or not one of the current PM buildup amounts PMa and PMb exceeds a second determination threshold Thpm2 (Thpm2 > Thpm1, see FIG. 4). If the determination result is negative (NO) (the PM buildup amount ≤ Thpm2), the EGR amount reduction control of step ST102 is continued. When the determination result of step ST103 has become positive (YES) (the PM buildup amount has exceeded the second determination threshold Thpm2), control proceeds to step ST104. The second determination threshold Thpm2 used in the determination process of step ST103 will be described below. Here, in this embodiment, once the PM buildup amount (PMa, PMb) exceeds the second determination threshold Thpm2, the determination process using the second determination threshold Thpm2 will not be performed. This is because hunting of the NOx release control described below can be avoided.

In step ST104, it is determined whether or not conditions for execution of the NOx release control are met. Specifically, for example, when the PM buildup amount of the DPF 22 has exceeded the second determination threshold Thpm2 (the determination result of step ST103 has become positive (YES)), it is determined whether or not the storage amount of NOx stored in the NSR catalyst 21 (estimated NOx storage amount) is so large that the PM buildup amount of the DPF 22 can be reduced by release of the stored NOx. If the determination result is positive (YES), control proceeds to step ST105. If the determination result of step ST104 is negative (NO) (the storage amount of NOx in the NSR catalyst 21 is so small that the PM removal effect of NO₂ cannot be obtained), control proceeds to step ST107. The conditions for execution of the NOx release control that are used in the determination process of step ST104 (the NOx storage amount at which the PM buildup amount can be reduced) are determined by experimentation, simulation, or the like.

Note that the determination of whether or not the conditions for execution of the NOx release control are met may be performed based on the travel distance. For example, if the travel distance from the end of the immediately previous one (previous control) of the previous restoration-from-sulfur-poisoning control, the previous NOx reduction control, and the previous NOx release control (described below) is greater than a predetermined value (a travel distance that NOx stored (accumulated) in the NSR catalyst 21 is large enough to reduce the PM buildup amount), it may be determined that the NOx release control can be executed. Alternatively, similarly, the determination of whether or not the conditions for execution of the NOx release control are met may be performed based on the operating time of the engine 1.

In step ST105, the EGR valve 72 is closed (the opening degree = 0) to interrupt the EGR control, and the NOx release control is executed. In the NOx release control, which is similar to the aforementioned restoration-from-sulfur-poisoning control, by continually and repeatedly adding fuel to exhaust gas by post injection, the temperature of the catalyst bed is increased to a high temperature (e.g., 600-700°C), and the exhaust gas is enriched to contain a large amount of HC. The high temperature of the catalyst bed and the enriched exhaust gas cause the NSR catalyst 21 to release the stored NOx, so that the amount of NO₂ flowing into the DPF 22 increases. A portion of PM buildup in the DPF 22 is removed due to the increase of NO₂, and therefore, the PM buildup amount decreases, so that the PM buildup rate is reduced. For example, as shown in an S portion in FIG. 4, the PM buildup amount decreases. By executing the NOx release control, the restoration-from-sulfur-poisoning control can be simultaneously executed.

Note that the reason why the EGR control is interrupted during the NOx release control (the EGR valve 72 is closed) is that HC caused by post injection is prevented from adhering to the EGR valve 72 of the EGR device 7 and the like.

Here, when the NOx release control is executed, as shown in the S portion in FIG. 4 the PM buildup amount (PMa, PMb) may decrease to be lower than or equal to the second determination threshold Thpm2. However, as described above, once the PM buildup amount exceeds the second determination threshold Thpm2, the determination process using the second determination threshold Thpm2 will not be performed. Therefore, even if the PM buildup amount becomes lower than or equal to the second determination threshold Thpm2, the NOx release control is continued. As a result, hunting of on/off of the NOx release control can be avoided.

Next, in step ST106, it is determined whether or not the NOx release control has been ended. If the determination result is negative (NO), the NOx release control is continued. The determination of whether or not the NOx release control has been ended may be performed as follows. For example, when the NOx storage amount (estimated NOx storage amount) of the NSR catalyst 21 is almost zero, it is determined that the NOx release control has been ended. Alternatively, when an elapsed time from the start of the NOx release control has reached a predetermined value (a time required for the NSR catalyst 21 to release the stored NOx, an appropriate value of which is obtained by experimentation, simulation, or the like), it may be determined that the NOx release control has been ended.

Thereafter, when the determination result of step ST106 has become positive (YES) (the NOx release control has been ended), the EGR control is resumed, and the EGR amount reduction control is executed again (step ST107). By thus executing the EGR amount reduction control again, as shown in FIG. 4 even after the end of the NOx release control, the state that the PM buildup rate (slope) of the DPF 22 is low (the PM buildup rate is lower than the dashed line of FIG. 4 (without the reduction control)) can be continued. Thereafter, in step ST108, it is determined whether or not one of the current PM buildup amounts PMa and PMb has reached the DPF regeneration start determination value Thpms. If the determination result is negative (NO) (the PM buildup amount < Thpms), the EGR amount reduction control is continued. When the determination result of step ST108 has become positive (YES) (the PM buildup amount has reached the DPF regeneration start determination value Thpms), the control routine is ended, and the EGR control is returned to the normal control.

On the other hand, if the determination result of step ST104 is negative (NO) (i.e., the PM buildup amount of the DPF 22 exceeds the second determination threshold Thpm2, and the conditions for execution of the NOx release control are not met), the NOx release control is not executed, and the EGR amount reduction control is continued (step ST107). Thereafter, in step ST108, it is determined whether or not one of the current PM buildup amounts PMa and PMb has reached the DPF regeneration start determination value Thpms. If the determination result is negative (NO) (the PM buildup amount < Thpms), the EGR amount reduction control is continued. When the determination result of step ST108 has become positive (YES) (the PM buildup amount has reached the DPF regeneration start determination value Thpms), the control routine is ended, and the EGR control is returned to the normal control.

Note that when one of the PM buildup amounts PMa and PMb has reached the DPF regeneration start determination value Thpms (the determination result of step ST108 has become positive (YES)), the DPF regeneration control is started. When the DPF regeneration control has been ended, the control routine of FIG. 3 is started again.

### <First and Second Determination Thresholds Thpm1 and Thpm2>

Next, the first and second determination thresholds Thpm1 and Thpm2 used in the PM buildup rate reduction control will be described.

### (First Determination Threshold Thpm1)

The first determination threshold Thpm1 used in the determination process of step ST101 of FIG. 3 is smaller than the DPF regeneration start determination value Thpms. The first determination threshold Thpm1 is set to an appropriate value (e.g., about 1/2 of a value (Thpms) corresponding to the limit of the PM buildup amount) that is obtained by experimentation, simulation, or the like, taking into consideration the fact that when the PM buildup amount of the DPF 22 is small, then even if the amount of NOx is increased by the EGR amount reduction control, the PM buildup rate reduction effect cannot be expected, and the amount of NOx passing through the DPF 22 increases.

### (Second Determination Threshold Thpm2)

The second determination threshold Thpm2 used in the determination process of step ST103 of FIG. 3 is smaller than the DPF regeneration start determination value Thpms and is greater than the first determination threshold Thpm1. The second determination threshold Thpm2 is preferably set to a value at which the PM buildup amount has increased to some extent with respect to the first determination threshold Thpm1, because if the value is close to the first determination threshold Thpm1, the PM buildup rate reduction effect of the EGR amount reduction control is not obtained. Based on this finding, an appropriate value (Thpm2) with which the PM buildup rate can be reduced to the extent possible by the NOx release control and the EGR amount reduction control after the NOx release control, is obtained by experimentation, simulation, or the like.

### <Advantages>

As described above, according to this embodiment, while the PM buildup amount of the DPF 22 is increasing (until reaching the DPF regeneration start determination value Thpms), the EGR amount to be recirculated into the air intake system is reduced so that the amount of NOx in exhaust gas increases (EGR amount reduction control), and the NOx storage catalyst is caused to release NOx (NOx release control). Moreover, after the NOx release control, the EGR amount reduction control is executed again. Therefore, the PM buildup rate can be reduced. As a result, the regeneration interval of the DPF 22 can be increased, whereby fuel efficiency and oil dilution can be improved. In addition, in this embodiment, the PM buildup amount of the DPF 22 is once reduced by execution of the NOx release control (the S portion in FIG. 4), whereby the regeneration interval of the DPF 22 can be more effectively increased.

Note that, in this embodiment, when the NOx release control is not allowed (the determination result of step ST104 of FIG. 3 is negative (NO)) (i.e., only the EGR amount reduction control is continued during a period of time from the time when the PM buildup amount of the DPF 22 has exceeded the first determination threshold Thpm1 to the time when the PM buildup amount of the DPF 22 has reached the DPF regeneration start determination value Thpms), the PM buildup rate can be reduced, whereby the regeneration interval of the DPF 22 can be increased (see a dash-dot-dot line of FIG. 4).

### - Other Embodiments -

In the above examples, while the PM buildup amount of the DPF is increasing (until reaching the DPF regeneration start determination value Thpms), the EGR amount reduction control and the NOx release control are executed. The present invention is not limited to this. Alternatively, while the PM buildup amount of the DPF is increasing, only the EGR amount reduction control may be executed. Alternatively, while the PM buildup amount of the DPF is increasing, only the NOx release control may be executed. Alternatively, while the PM buildup amount of the DPF is increasing, the NOx release control and the EGR amount reduction control may be successively executed (i.e., the NOx release control may be executed before the EGR amount reduction control may be executed).

In the above examples, the present invention is applied to an exhaust purification device in which an NSR catalyst is provided upstream from a particulate filter. The present invention is not limited to this. The present invention may be applied to an exhaust purification device in which a diesel particulate-NOx reduction system (DPNR) catalyst is provided upstream from a particulate filter. The present invention is also applicable to an exhaust purification device that includes a DPNR catalyst as a particulate filter and in which an NSR catalyst is provided upstream from the DPNR catalyst.

In the above examples, the PM buildup amount during normal burning is estimated by the following two techniques: the PM buildup amount is estimated based on an output signal from the pressure difference sensor 39; and the PM buildup amount is estimated by calculating the PM generation amount from a map based on an operating state (the engine rotational speed NE and the fuel injection amount) of the engine 1 and integrating the PM generation amount. The present invention is not limited to this. One of the two estimation techniques may be employed.

The PM buildup amount during normal burning may be estimated by other techniques. For example, the PM buildup amount during normal burning may be estimated based on a vehicle travel distance or travel time. Such another estimation technique(s) and at least one of the above two estimation techniques may be employed. When any one of these estimation techniques detects that the PM buildup amount has reached the regeneration start determination value, the DPF regeneration control may be executed.

In the above examples, the present invention is applied to an exhaust purification device that performs filter regeneration (DPF regeneration) by post injection after primary fuel injection. The present invention is not limited to this. The present invention is also applicable to an exhaust purification device in which fuel is added through a fuel addition valve to an exhaust path (e.g., the exhaust manifold 4a) upstream from a particulate filter to perform filter regeneration, or an exhaust purification device in which filter regeneration is performed by performing post injection and fuel addition in combination.

In the above examples, the exhaust purification device of the present invention is applied to an in-cylinder direct injection four-cylinder diesel engine. The present invention is not limited to this. Alternatively, for example, the present invention is applicable to diesel engines having any number of cylinders, such as an in-cylinder direct injection six-cylinder diesel engine.

The exhaust purification device of the present invention is also applicable to a lean burn gasoline engine, in which most of the entire operating region is occupied by an operating region in which engine operating is performed by burning mixture gas having a high air-fuel ratio (lean atmosphere). The present invention is not limited to vehicle engines and is applicable to engines for other applications.

### [Industrial Applicability]

The present invention is applicable to a device for purifying the exhaust gas of an internal combustion engine (engine). More specifically, the present invention is applicable to an exhaust purification device including a particulate filter (DPF) and a NOx storage catalyst (e.g., an NSR catalyst etc.) provided upstream from the particulate filter.

### [Reference Signs List]

- 1: ENGINE
- 2: INJECTOR
- 3: AIR INTAKE PATH
- 4: EXHAUST PATH
- 7: EGR DEVICE
- 72: EGR VALVE
- 21: NSR CATALYST (NOx STORAGE CATALYST)
- 22: DPF
- 39: PRESSURE DIFFERENCE SENSOR
- 100: ECU

## Claims

1. An exhaust purification device applicable to an internal combustion engine having an EGR device that recirculates a portion of exhaust gas emitted to an exhaust emission system into an air intake system, the exhaust purification device including a particulate filter that is provided in an exhaust path of the internal combustion engine to collect particulate matter in the exhaust gas, and a NOx storage catalyst that is provided in the exhaust path upstream from the particulate filter along the flow of the exhaust gas,
wherein
when the amount of particulate matter building up in the particulate filter has exceeded a predetermined determination threshold that is smaller than a filter regeneration start determination value, an EGR amount reduction control is executed to reduce an EGR amount to be recirculated into the air intake system, thereby increasing the amount of NOx in the exhaust gas.

2. An exhaust purification device for an internal combustion engine, the exhaust purification device including a particulate filter that is provided in an exhaust path of the internal combustion engine to collect particulate matter in exhaust gas, and a NOx storage catalyst that is provided in the exhaust path upstream from the particulate filter along the flow of the exhaust gas,
wherein
when the amount of particulate matter building up in the particulate filter has exceeded a predetermined determination threshold that is smaller than a filter regeneration start determination value, a NOx release control is executed to cause the NOx storage catalyst provided upstream from the particulate filter to release NOx.

3. The exhaust purification device for an internal combustion engine according to claim 1 or 2, wherein
when the amount of particulate matter building up in the particulate filter has exceeded a first determination threshold that is smaller than the filter regeneration start determination value, an EGR amount reduction control is executed to reduce an EGR amount to be recirculated into an air intake system so as to increase the amount of NOx in the exhaust gas, and when the amount of particulate matter building up in the particulate filter has exceeded a second determination threshold that is greater than the first determination threshold, a NOx release control is executed to cause the NOx storage catalyst to release NOx.

4. The exhaust purification device for an internal combustion engine according to claim 3, wherein
when the amount of particulate matter building up in the particulate filter has exceeded the first determination threshold, the EGR amount reduction control is executed, and when the amount of particulate matter building up in the particulate filter has exceeded the second determination threshold, EGR recirculation into the air intake system is interrupted, and the NOx release control is executed, and after the NOx release control is ended, the EGR amount reduction control is executed again.

5. The exhaust purification device for an internal combustion engine according to claim 3 or 4, wherein
when the amount of particulate matter building up in the particulate filter has exceeded the second determination threshold, then if conditions for execution of the NOx release control are met, the NOx release control is executed.
